# EUROPEAN PATENT APPLICATION

(11) **EP 3 023 602 A1**
(43) Date of publication of application: **25.05.2016**
(21) Application number: 15195693.5
(22) Date of filing: 20.11.2015
(51) Int. Cl.: F01D 15/12, F01D 25/34, F02K 3/06, F01D 5/28, F02C 7/36

(54) **TURBINE ENGINE ASSEMBLY AND CORRESPONDING MANUFACTURING METHOD**

(30) Priority: 21.11.2014 US 201462082634 P; 02.10.2015 US 201514873357
(71) Applicant: General Electric Company, Schenectady, NY 12345 (US)
(72) Inventor: VAN DER MERWE, Gert Johannes, Cincinnati, OH Ohio 45215 (US); PRENTICE, Ian Francis, Cincinnati, OH Ohio 45215 (US)
(74) Representative: Williams, Andrew Richard

(57) **Abstract**

A turbine engine assembly 100 is provided. The assembly includes a low-pressure turbine 112 configured to rotate at a first rotational speed, and a fan assembly 102 coupled to the low-pressure turbine and configured to rotate at a second rotational speed lower than the first rotational speed. The fan assembly includes a fan blade 114 fabricated from a composite material and having a configuration selected based on the second rotational speed of the fan assembly.

## Description

### BACKGROUND

The present disclosure relates generally to turbine engines and, more specifically, to a turbofan having a reduced fan tip speed, which enables an improved fan assembly architecture to be utilized.

At least some known gas turbine engines, such as turbofans, include a fan, a core engine, and a power turbine. The core engine includes at least one compressor, a combustor, and a high-pressure turbine coupled together in a serial flow relationship. More specifically, the compressor and high-pressure turbine are coupled through a shaft to form a high-pressure rotor assembly. Air entering the core engine is mixed with fuel and ignited to form a high energy gas stream. The high energy gas stream flows through the high-pressure turbine to rotatably drive the high-pressure turbine such that the shaft rotatably drives the compressor. The gas stream expands as it flows through a power or low-pressure turbine positioned aft of the high-pressure turbine. The low-pressure turbine includes a rotor assembly having a fan coupled to a drive shaft. The low-pressure turbine rotatably drives the fan through the drive shaft.

Many modem commercial turbofans are manufactured with increasingly large bypass ratios to facilitate improving engine efficiency. However, increasing the bypass ratio of the turbofan results in an increased fan size and fan tip speed. Fan blades in turbofans having relatively large bypass ratios are generally manufactured from a metallic material to ensure the fan blades have sufficient strength to withstand foreign object impacts at the increased fan tip speeds, for example. Fan blades manufactured from metallic material are generally heavy and increase the weight of a turbine engine. At least some known fan blades are manufactured from composite material, such as carbon fiber reinforced polymer. However, fan blades manufactured from composite material generally have reduced strength and impact resistance when compared to metallic counterparts. Therefore, it is desired to have a turbofan architecture than can accommodate non-metallic fan blades.

### BRIEF DESCRIPTION

In one aspect, a turbine engine assembly is provided. The assembly includes a low-pressure turbine configured to rotate at a first rotational speed, and a fan assembly coupled to the low-pressure turbine and configured to rotate at a second rotational speed lower than the first rotational speed. The fan assembly includes a fan blade fabricated from a composite material and having a configuration selected based on the second rotational speed of the fan assembly.

In another aspect, a turbine engine assembly is provided. The assembly includes a low-pressure turbine configured to rotate at a first rotational speed, and a drive shaft including a first portion and a second portion. The first portion is coupled to the low-pressure turbine. The assembly also includes a fan assembly coupled to a second portion of the drive shaft, and a gearbox coupled along the drive shaft between the first and second portions such that the fan assembly is configured to rotate at a second rotational speed lower than the first rotational speed. The fan assembly includes a fan blade having a configuration selected based on the second rotational speed of the fan assembly.

In yet another aspect, a method of manufacturing a turbine engine assembly is provided. The method includes coupling a low-pressure turbine to a first portion of a drive shaft, wherein the low-pressure turbine is configured to rotate at a first rotational speed. The method also includes coupling a fan assembly including a fan blade to a second portion of the drive shaft, coupling a gearbox along the drive shaft between the first and second portions such that the fan assembly is configured to rotate at a second rotational speed lower than the first rotational speed, and selecting a configuration of the fan blade based on the second rotational speed of the fan assembly.

### DRAWINGS

These and other features, aspects, and advantages of the present disclosure will become better understood when the following detailed description is read with reference to the accompanying drawings in which like characters represent like parts throughout the drawings, wherein:
FIG. 1 is a schematic illustration of an exemplary turbine engine assembly.
FIG. 2 is a schematic illustration of an exemplary fan assembly that may be used with the turbine engine assembly shown in FIG. 1.
FIG. 3 is a cross-sectional view of a fan blade that may be used with the fan assembly shown in FIG. 2 taken along line 3-3.
FIG. 4 is a schematic illustration of an alternative fan assembly that may be used with the turbine engine assembly shown in FIG. 1.

Unless otherwise indicated, the drawings provided herein are meant to illustrate features of embodiments of the disclosure. These features are believed to be applicable in a wide variety of systems comprising one or more embodiments of the disclosure. As such, the drawings are not meant to include all conventional features known by those of ordinary skill in the art to be required for the practice of the embodiments disclosed herein.

### DETAILED DESCRIPTION

Embodiments of the present disclosure relate to turbine engines, such as turbofans, and methods of manufacturing thereof. More specifically, the turbine engines described herein include a low-pressure turbine operating at a first rotational speed and a gearbox coupled to a drive shaft extending from the low-pressure turbine. The drive shaft is coupled between the low-pressure turbine and a fan assembly, and the gearbox decouples the rotational speed of the fan assembly from the low-pressure turbine such that the fan assembly rotates at a second rotational speed lower than the first rotational speed. Reducing the rotational speed of the fan assembly enables a configuration of the fan assembly to be modified to enhance performance of the turbine engine. For example, reducing the rotational speed of the fan assembly enables fan blades of the turbofan to be manufactured from composite material, which facilitates reducing the weight of the turbofan and facilitates reducing centrifugal loading at connections between the fan blades and a fan hub during operation. As such, further modifications to the fan assembly, such as utilizing variable pitch fan blades, can be implemented to enhance turbine engine performance and increase component architecture options for the turbine engine.

As used herein, the terms "axial" and "axially" refer to directions and orientations that extend substantially parallel to a centerline of the turbine engine. Moreover, the terms "radial" and "radially" refer to directions and orientations that extend substantially perpendicular to the centerline of the turbine engine. In addition, as used herein, the terms "circumferential" and "circumferentially" refer to directions and orientations that extend arcuately about the centerline of the turbine engine. It should also be appreciated that the term "fluid" as used herein includes any medium or material that flows, including, but not limited to, air, gas, liquid and steam.

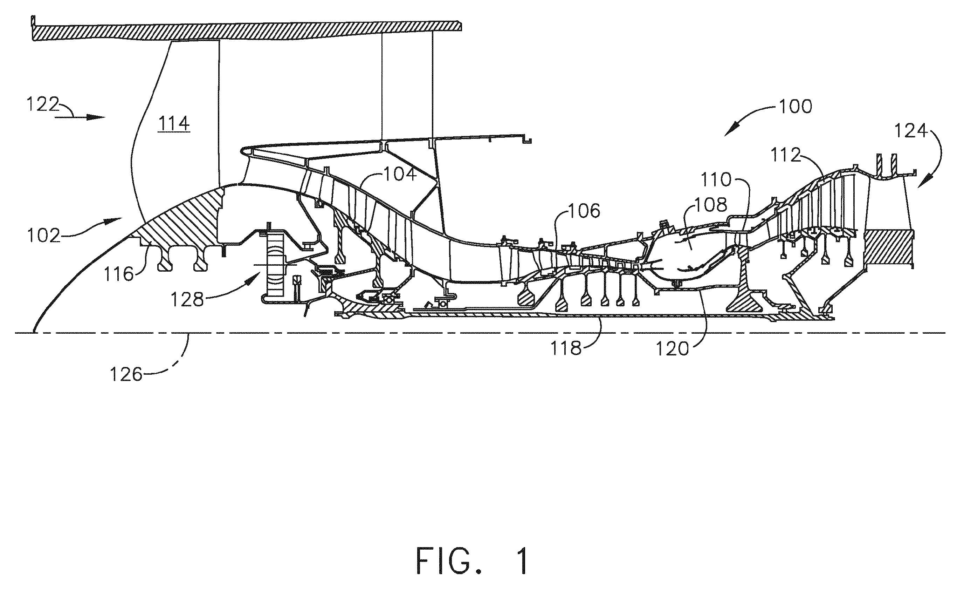

FIG. 1 is a schematic illustration of an exemplary turbine engine assembly 100 including a fan assembly 102, a low pressure or booster compressor 104, a high-pressure compressor 106, and a combustor 108. Fan assembly 102, booster compressor 104, high-pressure compressor 106, and combustor 108 are coupled in flow communication. Turbine engine assembly 100 also includes a high-pressure turbine 110 coupled in flow communication with combustor 108 and a low-pressure turbine 112. Fan assembly 102 includes an array of fan blades 114 extending radially outward from a rotor disk 116. Low-pressure turbine 112 is coupled to fan assembly 102 and booster compressor 104 via a first drive shaft 118, and high-pressure turbine 110 is coupled to high-pressure compressor 106 via a second drive shaft 120. Turbine engine assembly 100 has an intake 122 and an exhaust 124. Turbine engine assembly 100 further includes a centerline 126 about which fan assembly 102, booster compressor 104, high-pressure compressor 106, and turbine assemblies 110 and 112 rotate. Moreover, a speed-reducing gearbox 128 is coupled along first drive shaft 118 between fan assembly 102 and low-pressure turbine 112.

In operation, air entering turbine engine assembly 100 through intake 122 is channeled through fan assembly 102 towards booster compressor 104. Compressed air is discharged from booster compressor 104 towards high-pressure compressor 106. Highly compressed air is channeled from high-pressure compressor 106 towards combustor 108, mixed with fuel, and the mixture is combusted within combustor 108. High temperature combustion gas generated by combustor 108 is channeled towards turbine assemblies 110 and 112. Low-pressure turbine 112 rotates at a first rotational speed, and gearbox 128 operates such that fan assembly 102 operates at a second rotational speed lower than the first rotational speed. In one embodiment, the second rotational speed is such that a fan tip speed of fan blades 114 is less than about 1,200 feet per second. Combustion gas is subsequently discharged from turbine engine assembly 100 via exhaust 124. In an alternative embodiment, the rotational speeds of low-pressure turbine 112 and fan assembly 102 are decoupled by any mechanism or arrangement of components that enables turbine engine assembly 100 to function as described herein.

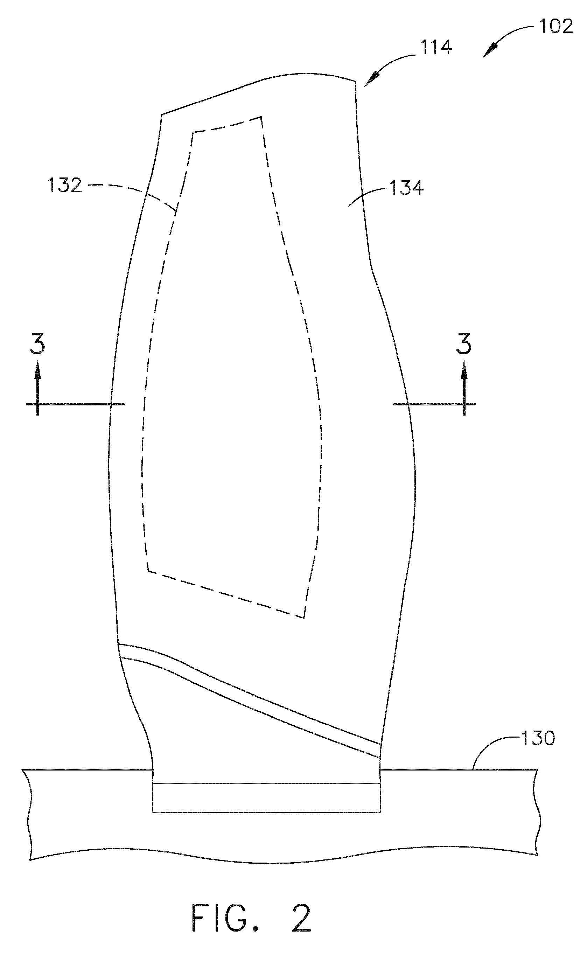

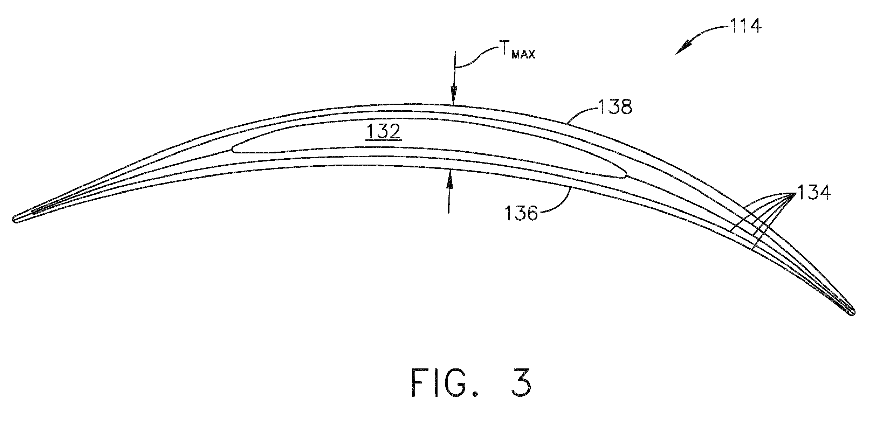

FIG. 2 is a schematic illustration of fan assembly 102 that may be used with turbine engine assembly 100 (shown in FIG. 1), and FIG. 3 is a cross-sectional view of fan blade 114 that may be used with fan assembly 102 taken along line 3-3. In the exemplary embodiment, fan assembly 102 includes fan blade 114 and a fan hub 130 sized to receive fan blades 114. As described above, turbine engine assembly 100 operates such that low-pressure turbine 112 rotates at a first rotational speed, and such that fan assembly 102 operates at a second rotational speed lower than the first rotational speed. Fan blades 114 and fan hub 130 have configurations that are selected based on the rotational speed of fan assembly 102. More specifically, slowing the rotational speed of fan assembly 102 enables fan blades 114 and fan hub 130 to have different configurations than if fan assembly 102 operated at the first rotational speed. For example, the configuration of fan blades 114 is selected from a variety of characteristics including at least one of a material used to fabricate fan blade 114, a maximum thickness Tₘₐₓ (shown in FIG. 3) of fan blade 114, and a mass of fan blade 114.

In one embodiment, fan blades 114 are fabricated at least partially from composite material. As used herein, the term "composite" refers to a material including a reinforcement material, such as fibers or particles, supported in a binder or matrix material. Exemplary composite material includes a carbonaceous (e.g. graphite) fiber embedded in a resin material such as epoxy. At least some composite materials are commercially available and include fibers unidirectionally aligned in a sheet impregnated with a resin, forming a pre-impregnated material (i.e. "prepreg"). Prepreg material can be formed into a part shape, and cured via an autoclaving process or press molding process to form a lightweight, rigid, and relatively homogeneous article.

Fan blade 114 includes a foam core structure 132 and at least one layer 134 of composite material applied to foam core structure 132. Foam core structure 132 has a cambered airfoil shape generally corresponding to the shape of fan blade 114. Foam core structure 132 is fabricated from a polymeric foam material having a lower density than the composite material. An exemplary polymeric foam material includes, but is not limited to, an elastomeric polyurethane foam having a density of about 40% of the density of the composite material. As such, fabricating fan blades 114 from the composite material and polymeric foam material facilitates reducing a weight of fan assembly 102 by up to about 20%. Moreover, operating fan assembly 102 at the slower second rotational speed enables fan blades 114 having reduced strength and impact resistance, when compared to metallic fan blades, to be utilized. In an alternative embodiment, fan blades 114 are fabricated from a metallic material having a reduced size when compared to fan blades utilized if fan assembly 102 operated at the first rotational speed.

Referring to FIG. 3, in the exemplary embodiment, maximum thickness Tₘₐₓ is defined between a pressure side 136 and a suction side 138 of fan blade 114, and is defined as the thickest portion of fan blade 114. Fan blades 114 having a greater relative maximum thickness Tₘₐₓ facilitate disturbing a flow of air channeled through fan assembly 102, which reduces engine performance. As such, operating fan assembly 102 at the slower second rotational speed enables fan blades 114 to be manufactured at a reduced size and, more specifically, with a reduced maximum thickness Tₘₐₓ to facilitate unobstructing the flow of air channeled through fan assembly 102.

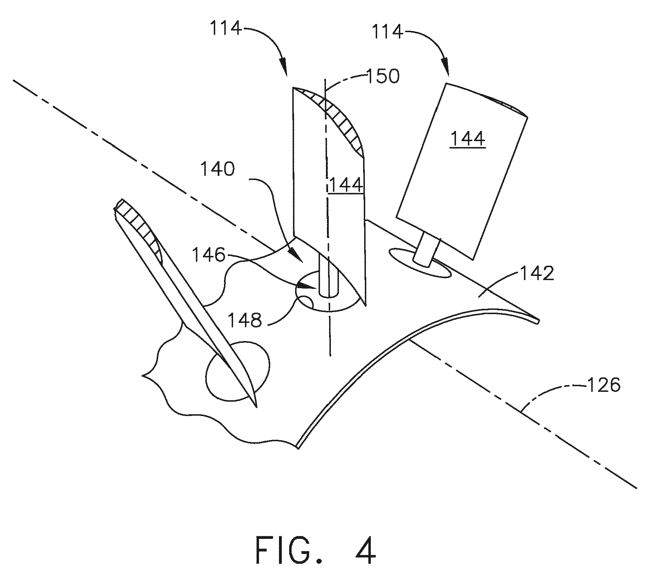

FIG. 4 is a schematic illustration of a coupling arrangement 140 for fan assembly 102 that may be used with turbine engine assembly 100 (shown in FIG. 1). In the exemplary embodiment, fan assembly 102 includes the array of fan blades 114 and a fan hub 142 sized to receive fan blades 114. More specifically, fan blades 114 include an airfoil 144, and are coupled to fan hub 142 via coupling arrangement 140. Coupling arrangement 140 includes a coupling member 146 extending from airfoil 144, and a plurality of openings 148 spaced apart at different circumferential locations about fan hub 142. Openings 148 are sized to receive at least a portion of coupling member 146, and are sized such that fan blades 114 are allowed to freely rotate therein. Moreover, fan blades 114 extend substantially coaxially along a radial axis 150 extending from fan hub 142. Coupling members 146 are coupled to an actuating mechanism (not shown) that facilitates selectively rotating fan blades 114 about radial axis 150 to modify a pitch of fan blades 114.

As described above, operating fan assembly 102 at the slower second rotational speed enables lighter weight fan blades 114 to be utilized than if fan assembly 102 operated at the first rotational speed. Utilizing lighter weight fan blades 114 reduces an amount of centrifugal loading induced on fan hub 142 by fan blades 114 during operation of turbine engine assembly 100. As such, an actuatable and more complex coupling arrangement between fan hub 142 and fan blades 114, such as coupling arrangement 140, may be used when compared to a standard dovetail coupling mechanism for use with a fixed pitch blade, for example.

The turbine engine assembly and methods described herein relate to turbine engines, such as turbofans, that leverage a low-speed fan assembly to enable the use of fan blades with characteristics that facilitate improving engine performance. For example, the fan assembly is configured to rotate at a lower rotational speed than a low-pressure turbine. Reducing the rotational speed of the fan assembly reduces strength and impact resistance requirements of the fan blades, which enables the fan blades to be manufactured from light-weight materials, for example. Moreover, a configuration of the fan assembly can be enhanced to improve engine performance.

Although specific features of various embodiments of the present disclosure may be shown in some drawings and not in others, this is for convenience only. In accordance with the principles of embodiments of the present disclosure, any feature of a drawing may be referenced and/or claimed in combination with any feature of any other drawing.

This written description uses examples to disclose the embodiments of the present disclosure, including the best mode, and also to enable any person skilled in the art to practice embodiments of the present disclosure, including making and using any devices or systems and performing any incorporated methods. The patentable scope of the embodiments described herein is defined by the claims, and may include other examples that occur to those skilled in the art. Such other examples are intended to be within the scope of the claims if they have structural elements that do not differ from the literal language of the claims, or if they include equivalent structural elements with insubstantial differences from the literal languages of the claims.

Various aspects and embodiments of the present invention are defined by the following numbered clauses:
1. A turbine engine assembly comprising:
   a low-pressure turbine configured to rotate at a first rotational speed; and
   a fan assembly coupled to said low-pressure turbine and configured to rotate at a second rotational speed lower than the first rotational speed, wherein said fan assembly comprises a fan blade fabricated from a composite material and having a configuration selected based on the second rotational speed of said fan assembly.
2. The turbine engine assembly in accordance with clause 1 further comprising:
   a drive shaft coupled between said low-pressure turbine and said fan assembly; and
   a gearbox coupled along said drive shaft such that said fan assembly rotates at the second rotational speed when the low-pressure turbine is rotating at the first rotational speed.
3. The turbine engine assembly in accordance with any preceding clause, wherein the configuration of said fan blade is selected from characteristics including at least one of a maximum thickness of said fan blade, and a mass of said fan blade.
4. The turbine engine assembly in accordance with any preceding clause, wherein the mass of said fan blade is lower than if said fan assembly were configured to rotate at the first rotational speed.
5. The turbine engine assembly in accordance with any preceding clause, wherein said fan blade comprises:
   a foam core structure; and
   at least one layer of the composite material applied to said foam core structure.
6. The turbine engine assembly in accordance with any preceding clause, wherein said fan assembly is configured to rotate at the second rotational speed such that a fan tip speed of said fan blade is less than about 1,200 feet per second.
7. The turbine engine assembly in accordance with any preceding clause, wherein said fan assembly comprises a fan hub configured to receive said fan blade, said fan blade configured to selectively rotate about a radial axis extending from said fan hub.
8. A turbine engine assembly comprising:
   a low-pressure turbine configured to rotate at a first rotational speed;
   a drive shaft comprising a first portion and a second portion, said first portion coupled to said low-pressure turbine;
   a fan assembly coupled to said second portion of said drive shaft; and
   a gearbox coupled along said drive shaft between said first and second portions such that said fan assembly is configured to rotate at a second rotational speed lower than the first rotational speed, wherein said fan assembly comprises a fan blade having a configuration selected based on the second rotational speed of said fan assembly.
9. The turbine engine assembly in accordance with any preceding clause, wherein the configuration of said fan blade is selected from characteristics including at least one of a material used to fabricate said fan blade, a maximum thickness of said fan blade, and a mass of said fan blade.
10. The turbine engine assembly in accordance with any preceding clause, wherein the mass of said fan blade is lower than if said fan assembly were configured to rotate at the first rotational speed.
11. The turbine engine assembly in accordance with any preceding clause, wherein said fan blade is fabricated from a composite material.
12. The turbine engine assembly in accordance with any preceding clause, wherein said fan blade comprises:
   a foam core structure; and
   at least one layer of a composite material applied to said foam core structure.
13. The turbine engine assembly in accordance with any preceding clause, wherein said fan assembly is configured to rotate at the second rotational speed such that a fan tip speed of said fan blade is less than about 1,200 feet per second.
14. The turbine engine assembly in accordance with any preceding clause, wherein said fan assembly comprises a fan hub configured to receive said fan blade, said fan blade configured to selectively rotate about a radial axis extending from said fan hub.
15. A method of manufacturing a turbine engine assembly, said method comprising:
   coupling a low-pressure turbine to a first portion of a drive shaft, wherein the low-pressure turbine is configured to rotate at a first rotational speed;
   coupling a fan assembly comprising a fan blade to a second portion of the drive shaft;
   coupling a gearbox along the drive shaft between the first and second portions such that the fan assembly is configured to rotate at a second rotational speed lower than the first rotational speed; and
   selecting a configuration of the fan blade based on the second rotational speed of the fan assembly.
16. The method in accordance with any preceding clause, wherein selecting a configuration of the fan blade comprises selecting the configuration of the fan blade from characteristics including at least one of a material used to fabricate said fan blade, a maximum thickness of the fan blade, and a mass of the fan blade.
17. The method in accordance with any preceding clause, wherein selecting a configuration comprises:
   determining a first mass of the fan blade when the fan assembly is configured to rotate at the first rotational speed; and
   reducing the mass of the fan blade from the first mass to a second mass based on the second rotational speed of the fan assembly.
18. The method in accordance with any preceding clause, wherein selecting a configuration comprises fabricating the fan blade from a composite material.
19. The method in accordance with any preceding clause further comprising configuring the fan assembly to rotate at the second rotational speed such that a fan tip speed of the fan blade is less than about 1,200 feet per second.
20. The method in accordance with any preceding clause, wherein coupling a fan assembly comprises sizing at least a portion of the fan blade for insertion within a fan hub, the fan blade configured to selectively rotate about a radial axis extending from the fan hub.

## Claims

1. A turbine engine assembly (100) comprising:
a low-pressure turbine (112) configured to rotate at a first rotational speed; and
a fan assembly (102) coupled to said low-pressure turbine and configured to rotate at a second rotational speed lower than the first rotational speed, wherein said fan assembly comprises a fan blade (114) fabricated from a composite material and having a configuration selected based on the second rotational speed of said fan assembly.

2. The turbine engine assembly (100) in accordance with claim 1, further comprising:
a drive shaft (118) coupled between said low-pressure turbine (112) and said fan assembly (102); and
a gearbox (128) coupled along said drive shaft (118) such that said fan assembly (102) rotates at the second rotational speed when the low-pressure turbine is rotating at the first rotational speed.

3. The turbine engine assembly (100) in accordance with either of claims 1 or 2, wherein the configuration of said fan blade (114) is selected from characteristics including at least one of a maximum thickness of said fan blade, and a mass of said fan blade.

4. The turbine engine assembly (100) in accordance with claim 3, wherein the mass of said fan blade (114) is lower than if said fan assembly (102) were configured to rotate at the first rotational speed.

5. The turbine engine assembly (100) in accordance with any preceding claim, wherein said fan blade (114) comprises:
a foam core structure (132); and
at least one layer (134) of the composite material applied to said foam core structure.

6. The turbine engine assembly (100) in accordance with any preceding claim, wherein said fan assembly (102) is configured to rotate at the second rotational speed such that a fan tip speed of said fan blade (114) is less than about 1,200 feet per second.

7. The turbine engine assembly (100) in accordance with any preceding claim, wherein said fan assembly (102) comprises a fan hub configured to receive said fan blade (114), said fan blade configured to selectively rotate about a radial axis extending from said fan hub.

8. A turbine engine assembly (100) in accordance with any of the preceding claims, the assembly further comprising:
a drive shaft (118) comprising a first portion and a second portion, said first portion coupled to said low-pressure turbine (112);
the fan assembly (102) coupled to said second portion of said drive shaft (118); and
a gearbox (128) coupled along said drive shaft between said first and second portions such that said fan assembly (102) is configured to rotate at the second rotational speed lower than the first rotational speed.

9. The turbine engine assembly (100) of any of the preceding claims, wherein the fan blade (114) is fabricated from a composite material.

10. The turbine engine assembly (100) in accordance with either of claims 8 or 9, wherein the configuration of said fan blade (114) is selected from characteristics including at least one of a material used to fabricate said fan blade, a maximum thickness of said fan blade, and a mass of said fan blade.

11. The turbine engine assembly (100) in accordance with any of claims 8 to 10, wherein said fan assembly (102) is configured to rotate at the second rotational speed such that a fan tip speed of said fan blade (114) is less than about 1,200 feet per second.

12. A method of manufacturing a turbine engine assembly (100), said method comprising:
coupling a low-pressure turbine (112) to a first portion of a drive shaft, wherein the low-pressure turbine is configured to rotate at a first rotational speed;
coupling a fan assembly (102) comprising a fan blade (114) to a second portion of the drive shaft (118);
coupling a gearbox (128) along the drive shaft between the first and second portions such that the fan assembly (102) is configured to rotate at a second rotational speed lower than the first rotational speed; and
selecting a configuration of the fan blade (114) based on the second rotational speed of the fan assembly (102).

13. The method in accordance with claim 12, wherein selecting a configuration of the fan blade (114) comprises selecting the configuration of the fan blade from characteristics including at least one of a material used to fabricate said fan blade, a maximum thickness of the fan blade, and a mass of the fan blade.

14. The method in accordance with claim 13, wherein selecting a configuration comprises fabricating the fan blade (114) from a composite material and/or
determining a first mass of the fan blade when the fan assembly (102) is configured to rotate at the first rotational speed; and
reducing the mass of the fan blade (114) from the first mass to a second mass based on the second rotational speed of the fan assembly.

15. The method in accordance with any of claims 12 to 14, further comprising configuring the fan assembly (102) to rotate at the second rotational speed such that a fan tip speed of the fan blade (114) is less than about 1,200 feet per second.
